(19) Europäisches Patentamt
European Patent Office
Office européen des brevets

(11) EP 1 729 152 B1

(12) **FASCICULE DE BREVET EUROPEEN**

(45) Date de publication et mention de la délivrance du brevet:
**02.12.2009 Bulletin 2009/49**

(21) Numéro de dépôt: **06290752.2**

(22) Date de dépôt: **05.05.2006**

(51) Int Cl.:
***G01V 11/00*** *(2006.01)*

(54) **Méthod de changement d'échelle des perméabilités absolues pour construire un modèle de simulation d'écoulement**

Verfahren zur Änderung des Maßstabs von absoluten Permeabilitäten zum Erstellen eines Strömungssimulationsmodells

Method for changing the scale of absolute permeabilities to build a flow simulation model

(84) Etats contractants désignés:
**GB**

(30) Priorité: **02.06.2005 FR 0505679**

(43) Date de publication de la demande:
**06.12.2006 Bulletin 2006/49**

(73) Titulaire: **Institut Français du Pétrole**
**92852 Rueil Malmaison Cedex (FR)**

(72) Inventeurs:
• **Ricard, Ludovic**
**11400 Issel (FR)**
• **Le-Ravalec-Dupin, Mickaële**
**92500 Rueil-Malmaison (FR)**

(56) Documents cités:
**WO-A-00/79423**

• **DURLOFSKY L ET AL: "Scale up of heterogeneous three dimensional reservoir descriptions" SPE ANNUAL TECHNICAL CONFERENCE AND EXHIBITION, no. 30709, 22 octobre 1995 (1995-10-22), pages 313-326, XP002186719**
• **DURLOFSKY L J: "NUMERICAL CALCULATION OF EQUIVALENT GRID BLOCK PERMEABILITY TENSORS FOR HETEROGENEOUS POROUS MEDIA" WATER RESOURCES RESEARCH, AMERICAN GEOPHYSICAL UNION, US, vol. 27, no. 5, mai 1991 (1991-05), pages 699-708, XP008033632 ISSN: 0043-1397**

## Description

La présente invention concerne une méthode de changement d'échelle des valeurs de perméabilités absolues associées à un modèle représentatif d'un milieu poreux à une échelle fine vers les valeurs de perméabilité absolue inter-mailles associées à un modèle représentatif du milieux poreux à l'échelle de la simulation d'écoulement.

En particulier, la méthode selon l'invention s'applique à la construction d'un modèle numérique servant à représenter la distribution spatiale, dans une zone souterraine, de la perméabilité absolue. Elle vise à donner à l'ingénieur les moyens d'estimer précisément les réserves d'un gisement pétrolier et d'optimiser la récupération de ces réserves en étudiant différents schémas de production.

## État de la technique

L'objectif de l'ingénierie de réservoir est de prédire le comportement dynamique du sous-sol afin de maximiser la production d'hydrocarbure. Il convient donc de construire des modèles représentatifs des réservoirs qui soient aussi fidèles que possible vis-à-vis des données collectées (diagraphies, données sismiques, données d'affleurement, historiques de production...) et d'estimer, par des simulations d'écoulements, la production de ces réservoirs contraints. On espère, dans la mesure où l'on dispose d'un modèle de réservoir compatible avec l'ensemble des données, réduire l'incertitude sur les prédictions de production. Préalablement à la simulation d'écoulement, on réalise une caractérisation du réservoir en terme de géométrie et de propriétés pétrophysiques sous forme de modèles numériques. Dans le cas de modèle complexe contenant un grand nombre de détails, les simulations numériques peuvent s'avérer très gourmandes en ressources informatiques. Il convient pour des raisons économiques de les réduire tout en conservant un bon compromis entre rapidité et précision des résultats.

Lorsque l'on souhaite étudier un phénomène physique, on détermine tout d'abord les équations physiques que l'on espère représentatives de ce phénomène et un domaine à $N$ dimensions ($N>0$ est en général égal à deux ou trois) sur lequel le phénomène en question opère. Les phénomènes physiques rencontrés sont de natures très diverses, on peut citer par exemple : les mécanismes réactionnels, convectifs ou encore diffusifs.

Les équations sont généralement des équations ordinaires différentielles ou des équations aux dérivées partielles. Le système d'équations ainsi défini est communément appelé modèle physique du phénomène. Une simulation numérique de ce modèle consiste à résoudre numériquement le système d'équations pour le modèle en question. Les équations du modèle sont classiquement résolues en utilisant des approches de type volumes finis, éléments finis, éléments finis mixtes... Une fois l'approche de résolution des équations et le domaine d'étude choisis, le système d'équations est discrétisé selon un échantillonnage définissant des points sur l'ensemble du domaine. Ces points sont aussi appelés noeuds de grille ou tout simplement noeuds. Une liaison effectue le lien entre deux noeuds voisins. On définit une cellule par le volume contenu dans une surface fermée joignant plusieurs noeuds de grille. Une face est le lien entre deux cellules voisines. Le maillage d'un domaine est constitué de l'ensemble des noeuds contenus dans ce domaine. Pour chacun des paramètres physiques, une valeur de celui-ci est associée soit à une cellule, soit à un noeud, selon l'approche de discrétisation des équations utilisée. Selon la nature du phénomène physique étudié, certaines approches de résolution des équations sont plus adaptées que d'autres. Par exemple, lorsque l'on souhaite résoudre un problème diffusif pur, les éléments finis délivrent des résultats plus précis que les approches de type volumes finis. Par contre, les approches de types volumes finis permettent de mieux rendre compte des phénomènes convectif et dispersif.

En ingénierie pétrolière, la plupart des modèles numériques sont associés à un maillage structuré. Au sein d'un maillage structuré, une cellule a un nombre fixe de faces et donc de cellules voisines. Ce type de maillage est simple à construire et l'écriture des équations est relativement simple. On peut citer les maillages cartésiens, les maillages radiaux ou encore les maillages de type « Corner Point Geometry ». De tels maillages sont décrits par exemple dans les documents suivants :

- Pointing D.K., 1989. Corner Point Geometry in reservoir simulation. Joint IMA/SPE European Conference on the Mathematics of Oil Recovery.

- Balaven-Clermidy,S., 2001, " Génération de maillages hybrides pour la simulation des réservoirs pétroliers. ", PhD thesis, Ecole des Mines de Paris.

Néanmoins, ces maillages n'offrent pas une grande flexibilité notamment pour prendre en compte les failles, les puits, mais aussi la variabilité spatiale des propriétés physiques. Pour palier ce problème, les ingénieurs réservoirs ont eu recours aux maillages non structurés. Dans un maillage non structuré, les cellules ont un nombre variable de faces, donc de cellules voisines. De tels maillages sont connus de l'homme du métier. On peut citer les maillages de type Voronoï et les maillages avec raffinement local. De tels maillages sont décrits par exemple dans les documents suivants :

- Palagi, C.L. and Aziz, K. : « Use of voronoï grid in reservoir simulation », papier SPE 22889 présenté au 66ième Annual Technical Conference and Exhibition, Dallas,Texas, 1991

- Lepage, F.: « Génération de maillages tridimensionnels pour la simulation des phénomènes physiques en géoscience. », thèse de doctorat, Institut National Polytechnique de Lorraine, 2003.

Dans ce cas, l'écriture des méthodes de résolution des équations est plus complexe à réaliser, mais la géométrie des objets complexes du domaine est mieux reproduite qu'avec des maillages structurés. La nature des phénomènes physiques en jeu en ingénierie pétrolière conduit les ingénieurs à utiliser préférentiellement, pour effectuer les simulations d'écoulements, des approches basées sur le calcul des flux entre les cellules. Parmi les approches utilisées, on peut citer les éléments finis mixtes et les volumes finis. De telles techniques sont décrites par exemple dans les documents suivants :

- Brezzi, F. and Fortin, M., « Mixed and hybrid finite element method ». Springer-Verlag, New York, 1991.

- Eymard, R., Gallouët, T. and Herbin, R., « Finite voilume methods ». In Ciarlet, P.G. and Lions, J.L., "Handbook of numerical analysis", 2000.

Ces approches nécessitent de calculer les flux de quantités conservatives à travers chacune des faces des cellules du maillage. Aussi, faut-il disposer des valeurs des propriétés pétrophysiques au niveau des faces. Les propriétés pétrophysiques que l'on peut être amené à étudier sont par exemple la porosité, la perméabilité absolue, les perméabilités relatives à l'huile, à l'huile et au gaz, les vitesses des fluides, la pression capillaire ou encore la saturation des différents fluides.

La construction d'un modèle numérique du sous-sol compatible avec l'ensemble des données disponibles peut conduire à un modèle numérique contenant un très grand nombre de détails. Ce modèle numérique est communément appelé modèle géologique. L'étape de simulation d'écoulement sur un tel modèle s'avère alors très lente, car le temps de calcul requis s'exprime, dans le meilleur des cas, comme une fonction linéaire du nombre de mailles. Il est alors courant en ingénierie des réservoirs pétroliers d'avoir recours à la création d'un nouveau modèle numérique dont le maillage associé comporte moins de mailles. Ce nouveau modèle numérique sera appelé modèle de réservoir par la suite. L'étape de simulation d'écoulement sur le modèle de réservoir nécessite des temps de calculs acceptable. Lors de la construction du modèle de réservoir, il est nécessaire d'attribuer les valeurs de propriétés pétrophysiques associés à chacune des mailles du maillage de ce modèle. Pour un modèle numérique, on définit une grandeur géométrique caractéristique de chacune des mailles associées au modèle. Cette grandeur est appelée échelle. Dans un modèle numérique, une propriété est connue à une échelle donnée. Lors du recours au modèle de réservoir, l'échelle des propriétés du milieu change. Une étape de changement d'échelle des propriétés en question est alors nécessaire.

Le comportement dynamique du sous-sol étant très complexe, lors du processus de changement d'échelle, on procède par étapes successives pour calculer les unes après les autres les différentes propriétés pétrophysiques qui vont composer le modèle de réservoir. La première d'entre elles est la perméabilité absolue. La perméabilité absolue est la propriété pétrophysique qui rend compte de l'aptitude de la roche à laisser le fluide traverser ses pores. Etant donné la structure géologique complexe du sous-sol, la perméabilité absolue est une propriété spatialement hétérogène. Elle est généralement calculée, pour le modèle géologique, à l'aide d'échantillons prélevés aux puits. On suppose que la valeur de la perméabilité absolue associée à chaque maille du modèle géologique est constante sur la maille en question. Comme la perméabilité absolue est une variable non additive, son changement d'échelle ne peut s'envisager à partir d'une loi simple. Cette problématique a motivé le développement de nombreuses techniques comme les approches heuristiques, la théorie de l'homogénéisation, ou les approches numériques. Ces techniques sont décrites, par exemple, dans les documents suivants :

- Renard, Ph. and Marsily, G. de, 1997, Calculating equivalent permeability: a review. Advances in water resources, 20 :253-278.

- Durlofsky, L. J., 2003, Upscaling of geocellular models for reservoir flow simulation : a review of recent progress. Baden-Baden, Germany, 7th International Forum on Reservoir Simulation.

Les méthodes d'homogénéisation ont été développées pour l'analyse de champs de perméabilité statistiquement homogènes et les méthodes heuristiques pour des configurations particulières comme les milieux stratifiés ou les milieux bidimensionnels à distribution lognormale. Dans tous les autres cas, le recours à des méthodes numériques est incontournable. Ces méthodes s'appuient sur la définition d'un ou de plusieurs critères d'équivalence. Les critères généralement utilisés ne s'appliquent pas directement aux perméabilités, mais à des variables additives et conservatives, telles la masse, ou l'énergie dissipée par le système. Le calcul de ces critères requiert des simulations d'écoulement monophasique à l'échelle fine et parfois à l'échelle grossière. De fait, ces méthodes de changement d'échelle sont dites numériques.

Les méthodes numériques de changement d'échelle de la perméabilité absolue peuvent être classées selon la taille du domaine du modèle géologique impliqué dans les simulations d'écoulement. Pour effectuer une simulation d'écoulement, on extrait du modèle géologique les valeurs de perméabilités absolues ainsi que le maillage associé contenus dans le domaine en question. On parle de méthode locale lorsque le domaine est égal au volume de la maille du modèle de réservoir dont on veut calculer la valeur de perméabilité. Les méthodes avec voisinage impliquent un domaine plus grand que le volume de la maille du modèle de réservoir dont on souhaite calculer la valeur de perméabilité associée. Enfin, pour les méthodes globales, le domaine de la simulation d'écoulement est le modèle géologique complet. Contrairement aux méthodes locales et avec voisinages, les méthodes globales permettent d'appréhender la connectivité à grande échelle que l'on observe dans le modèle géologique. De telles techniques sont décrites par exemple dans les documents suivants :

- Khan, S. A. and Dawson A. G., Methods of upscaling permeability for unstructured grids. Brevet numéro US6,826,520 B1, 30 november 2004.

- Pickup, G. E., Jensen, P. S., Ringrose, P.S. and Sorbie K. S., A method for calculating permeability tensors using perturbed boundary conditions, Third European Conference on the Mathematics of the Oil Recovery, 1992.

- Chen, Y., Durlofsky, L.J., Gerritsen, M and Wen X.H., A coupled local-global upscaling approach for simulating flow in highly heterogeneous formations, Advances in water resources, 26(2003) 1041-1060.

Les simulations d'écoulements sur le modèle de réservoir impliquent des approches basées sur le calcul des flux entre les cellules. Afin d'évaluer ces flux, il faut connaître les propriétés pétrophysiques le long des faces des cellules. Pour calculer les flux, il est courant d'avoir recours aux transmissivités inter-mailles. La transmissivité inter-maille permet de quantifier le flux numérique qui traverse la face en question. Elle dépend de la méthode de résolution de la simulation d'écoulement et de la valeur de la perméabilité absolue inter-maille. On définit la perméabilité absolue inter-maille comme la valeur de la perméabilité absolue le long de la face. Le calcul des valeurs de perméabilité absolue inter-maille à partir des valeurs de perméabilités absolues des mailles ne peut pas s'envisager à partir d'une loi simple dans un contexte général. Des formules approchées existent. De telles techniques sont décrites, par exemple, dans les documents suivants :

- Peaceman, D. W., 1977, Fundamentals of numerical reservoir simulation, Elsevier scientific pub., New York.

- Journel, A. G., Deutsch, C. and Desbarats A. J., 1986, Power averaging for block effective permeability, paper SPE 15128 presented at the 56th California Regional Meeting of SPE, Society of Petroleum Engineer, Long Beach,

Néanmoins, une erreur sur l'estimation de la perméabilité inter-maille est commise. Ce résultat est mis en évidence dans le document suivant :

- Romeu, R. K. and Noetinger, B., 1995, Calculation of internodal transmissivities in finite difference models of flows in heterogeneous porous media, Water Resources Research, 31(4), 943-959.

Un point important de l'étape de changement d'échelle est la nature de son résultat. Les méthodes existantes de changement d'échelle de la perméabilité absolue calculent soit les valeurs de perméabilités absolues associées aux mailles du modèle de réservoir, soit les valeurs de transmissivités inter-mailles. Aucune méthode n'existe pour déterminer les valeurs de perméabilités inter-mailles du modèle de réservoir.

La méthode permettant de mettre à l'échelle un modèle géologique, c'est-à-dire de construire un modèle numérique de réservoir représentatif d'un milieu hétérogène poreux, doit donc répondre à plusieurs impératifs :

1. La méthode doit être indépendante de la structure et de la forme du maillage associé au modèle numérique de réservoir.

2. La méthode doit permettre, si nécessaire, de reproduire sur le modèle de réservoir, la connectivité à grandes échelles du modèle géologique.

3. La méthode doit limiter l'erreur des simulations d'écoulements par l'utilisation des perméabilités inter-mailles.

La méthode selon l'invention, s'intéresse au calcul des valeurs de perméabilité inter-mailles du modèle de réservoir et ce, quelque soit la forme et la structure du maillage associé à ce modèle.

**La méthode selon l'invention:**

L'invention concerne une méthode pour calculer les valeurs de perméabilités absolues inter-mailles associées à un modèle de réservoir à l'échelle des simulations d'écoulements représentatif du milieu poreux à partir des valeurs de perméabilité absolue associées à un modèle géologique représentatif du même milieu poreux, dans laquelle on effectue les étapes suivantes:

- on discrétise dans l'espace le modèle de réservoir à l'aide d'un maillage;

- on effectue une simulation d'écoulement monophasique en régime permanent sur le modèle géologique;

- on isole un domaine spatial de volume non nul contenant chacune des faces des mailles du modèle de réservoir, et on extrait du modèle géologique les mailles du modèle contenues dans ledit domaine, ainsi que les valeurs de perméabilités absolues, de pression, de gradient de pression et de vitesses de filtration associées pour disposer d'un modèle local relatif à la face considérée;

- on calcule une valeur moyenne du vecteur vitesse de filtration relatif au modèle local d'un domaine;

- on construit les conditions aux limites du modèle local relatif à chaque face des mailles du modèle de réservoir à l'aide des résultats de la simulation d'écoulement sur le modèle géologique;

- on perturbe séquentiellement lesdites conditions aux limites selon trois directions de l'espace afin de construire trois de jeux de conditions aux limites;

- on réalise des simulations d'écoulement monophasique en régime permanent selon ces trois jeux de conditions aux limites sur chaque modèle local relatif à la face considérée du maillage du modèle de réservoir;

- on calcule les valeurs des débits et des gradients de pression associées à chaque maille du domaine relatif à chaque face;

et, on calcule à partir de ces valeurs, les perméabilités absolues inter-mailles associées à chacune des mailles du modèle de réservoir.

La simulation d'écoulement peut être réalisée grâce à des méthodes de discrétisation des équations aux dérivées partielles de type volumes finis cinq points.

La simulation d'écoulement peut être réalisée grâce à des méthodes de simulation des écoulements dans un milieu poreux hétérogène utilisant des transformées de Fourier rapides.

Des conditions aux limites réalistes peuvent être utilisées pour la simulation d'écoulement sur le modèle géologique.

Le modèle local relatif à une face peut être raffiné pour augmenter la précision des simulations d'écoulements sur ce modèle.

Les valeurs des perturbations des conditions aux limites peuvent être calculées à l'aide des valeurs de gradient de pression ou de la vitesse de filtration calculées à l'aide de la simulation d'écoulement sur le modèle géologique.

Les perméabilités inter-mailles peuvent être calculées dans une base quelconque.

Les perméabilités inter-mailles peuvent être utilisées pour calculer les transmissivités inter-mailles.

**Présentation succincte des figures :**

D'autres caractéristiques et avantages de la méthode selon l'invention, apparaîtront à la lecture de la description ci-après d'exemples non limitatifs de réalisations, en se référant aux figures annexées et décrites ci-après:

- la figure 1 illustre un maillage structuré bi-dimensionnel associé au modèle géologique représentatif d'un milieu poreux;

- la figure 2 illustre un maillage non structuré bi-dimensionnel associé au modèle de réservoir représentatif d'un milieu poreux;

- la figure 3 illustre le domaine bidimensionnel relatif à une face.

**Description détaillée de la méthode**

La méthode selon l'invention concerne une méthode de changement d'échelle numérique, basé sur le calcul d'écoulements de fluide, des valeurs de perméabilités absolues associées à un modèle représentatif d'un milieu poreux à une échelle fine vers les valeurs de perméabilités absolues inter-mailles associées à un modèle représentatif du même milieu poreux à l'échelle de la simulation d'écoulement. La méthode est particulièrement utilisable lorsque le maillage associé au modèle géologique est cartésien et quel que soit le maillage associé au modèle de réservoir. La méthode comporte les étapes suivantes :

1. On génère le maillage que l'on souhaite associer au modèle de réservoir.

2. On effectue une simulation d'écoulement monophasique en régime permanent sur le modèle géologique.

3. Pour chaque face de chacune des mailles du modèle de réservoir, on isole un domaine spatial de volume non nul la contenant. On extrait alors du modèle géologique les mailles du modèle contenues dans le domaine précédemment calculé ainsi que les valeurs de perméabilités absolues, de pression, de gradient de pression et de vitesses de filtration associées. On dispose ainsi d'un modèle à l'échelle fine local relatif à la face considérée.

4. Pour chaque domaine relatif à une face, on calcule une valeur moyenne du vecteur vitesse de filtration relatif à ce domaine local.

5. Avec les mêmes résultats, on construit les conditions aux limites du domaine local relatif à chaque face des mailles du modèle de réservoir. Ces conditions aux limites sont séquentiellement perturbées selon les trois directions de l'espace.

6. Des simulations d'écoulement monophasique en régime permanent sont alors réalisées selon ces trois jeux de conditions aux limites sur chaque modèle local relatif à la face considérée du maillage du modèle de réservoir.

7. A partir des résultats de ces trois simulations d'écoulement, on calcule les valeurs des débits et des gradients de pression associées à chaque maille du domaine relatif à chaque face.

8. Enfin, on calcule à partir de ces résultats les valeurs de perméabilités absolues inter-mailles associées à chacune des mailles du modèle de réservoir.

Les huit étapes sont décrites en détails ci-après :

1. Génération d'un maillage flexible.

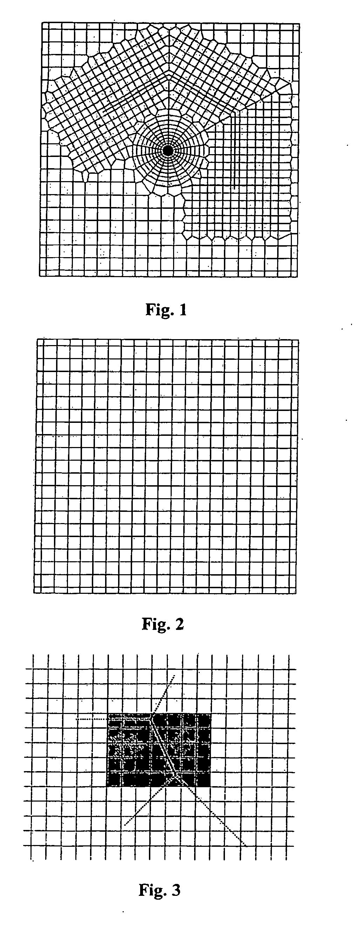

La génération d'un maillage flexible est une opération bien connue de l'homme du métier. Un tel maillage est décrit par exemple dans le document de S. Balaven-Clermidy (2001) précédemment cité.
On peut, par exemple, générer un maillage radial autour de puits verticaux, un maillage fin orthogonal autour de puits horizontaux et un maillage cartésien régulier loin des puits. La figure 1 illustre un maillage non structuré que l'on peut associer à un modèle de réservoir.
Dans le cadre de la méthode selon l'invention, ce maillage peut également être fourni comme donnée de départ.

2. Simulation d'écoulement monophasique permanent :

Une simulation d'écoulement, généralement portant sur un écoulement monophasique permanent associé à un jeu de conditions aux limites, est alors réalisée sur l'ensemble du domaine du modèle géologique. Le modèle géologique est supposé associer un maillage cartésien. Un tel maillage est illustré par exemple par la figure 2. Le jeu de conditions aux limites peut être quelconque. L'écoulement d'un unique fluide en régime permanent dans un milieu poreux est régi par la loi de Darcy :

$$\mathbf{U} = -\frac{\mathbf{K}}{\eta} grad(P) \qquad\qquad (1$$

où $U$ est la vitesse de filtration, $K$ la perméabilité et $P$ la pression du fluide. $\eta$ est la viscosité du fluide. Par ailleurs, le fluide étant incompressible, l'équation de conservation de la masse s'écrit :

$$div(\mathbf{U}) = 0 \qquad\qquad (2$$

En combinant les deux équations précédentes, on obtient l'équation de diffusivité :

$$div\left(\frac{\mathbf{K}}{\eta} grad(P)\right) = 0 \qquad\qquad (3$$

Afin de simplifier les développements qui suivent, on suppose que la viscosité du fluide est invariante en espace.

Quelque soit la technique utilisée pour résoudre cette équation, on veut estimer, pour un champ de perméabilité donné, les champs de pression et vitesses correspondants. Parmi ces méthodes, on distingue notamment les méthodes basées sur le calcul des flux aux interfaces entre les mailles et les méthodes par transformée de Fourier.

Les méthodes basées sur le calcul des flux nécessitent de calculer les flux aux interfaces entre les mailles. Ces méthodes sont bien connues de l'homme du métier. De telles méthodes sont décrites par exemple dans les documents Brezzi, F. and Fortin, M., (1991) et Eymard, R., et al., (2000) précédemment cités. Pour connaître ces flux, il est nécessaire de calculer la transmissivité inter-maille. On définit la transmissivité inter-maille d'une face par l'aptitude du fluide donné à traverser la face en question sous la contrainte d'un gradient de pression. L'expression de la transmissivité inter-maille est la suivante :

$$T_{ij} = \frac{k_{ij}A}{\Delta s} \qquad\qquad (4$$

avec $k_{ij}$ la perméabilité inter-maille de la face, $A$ est l'aire de la face séparant la maille $i$ et la maille $j$, $\Delta s$ est la distance caractéristique du parcours du fluide entre le centre de la maille $i$ et le centre de la maille $j$. Le calcul des transmissivités inter-maille est une opération bien connue de l'homme du métier. De telles méthodes sont décrites par exemple dans les documents suivants : Peaceman, D. W., (1977) et Journel, A. G. *et al.,* (1986) précédemment cités. Les résultats de ces méthodes basées sur le calcul des flux sont les valeurs de gradient de pression, de vitesse de filtration aux interfaces entre les mailles et les valeurs de pression aux centres des mailles.

On peut aussi avoir recours aux méthodes de simulation par transformées de Fourier rapides. De telles techniques sont décrites par exemple dans la demande de brevet FR04/05212 du demandeur. Cette technique permet de connaître les valeurs de pression, vitesses de filtration et gradient de pression au centre des mailles du modèle numérique.

3. Construction du modèle local relatif à chaque face :

Pour chaque face du maillage associé au modèle de réservoir, on isole un domaine de type parallélépipède rectangle de volume non nul qui contient entièrement la face en question. Sur la figure 3, on a représenté le domaine isolé, en partie grisé, qui englobe la face d'une maille, en trait plein. Les traits en pointillés représentent les autres faces des mailles en contact.

Selon chaque direction, la taille du domaine selon cette direction est un nombre entier de cellules du modèle géologique. Si tel n'est pas le cas, on agrandit le domaine selon cette direction de façon à ce que celui-ci contienne un nombre entier de cellules du modèle géologique. On appelle modèle local relatif à une face, le modèle géologique restreint au domaine évoqué ci-dessus. Les valeurs de perméabilité absolue associées aux mailles du modèle local relatif à la face sont identiques à celles des mailles correspondantes au sein du modèle géologique.

Si les longueurs caractéristiques du domaine sont inférieures à deux fois les longueurs caractéristiques des mailles du modèle géologique alors une étape de raffinement de maillage est nécessaire. Les valeurs de perméabilité absolue associées aux mailles du modèle local sont alors calculées par une étape de downscaling. Une telle technique est décrite, par exemple, dans la demande de brevet FR04/09824 du demandeur.

Le domaine du modèle local relatif à une face est appelé maille décalée par la suite.

4. Calcul des valeurs moyennes relatives au modèle local de chaque face :

Pour chaque modèle relatif à une maille décalée, on calcule pour les trois composantes de la vitesse de filtration, la valeur moyenne de la vitesse de filtration relative au modèle local. On l'obtient par somme de l'ensemble des valeurs de la composante de la vitesse recherchée du modèle local et moyenne selon la direction recherchée.

$$U_{x_i}^c = \frac{1}{n}\sum_{j=1}^{n} U_{x_i}^j \qquad\qquad (5$$

Avec $U_{x_i}^j$ la composante selon la direction $x_i$ de la vitesse de filtration de la maille géologique j, $U_{x_i}^c$ la composante selon la direction $x_i$ de la vitesse de filtration du modèle local et n le nombre de maille du modèle local selon la domaine recherchée.

5. Calcul des trois jeux de conditions aux limites pour chacun des modèles locaux relatif à une face du maillage du modèle de réservoir :

- Si l'on dispose d'une méthode de simulation d'écoulement basée sur le calcul des flux, les conditions aux limites que l'on prend en compte sont de type Dirichlet, c'est-à-dire que la valeur de la pression est fixée le long des frontières du domaine.

  Pour calculer la valeur de pression que l'on va imposer sur les faces de la maille décalée, on va déterminer dans un premier temps pour chaque face une valeur moyenne de la pression. Celle-ci est calculée à l'aide d'une moyenne arithmétique sur l'ensemble des valeurs de pression des mailles du modèle géologique qui sont adjacentes à la frontière en question. On obtient alors des conditions aux limites de type Dirichlet en pression sur chaque face de la maille décalée.

  Pour construire le premier jeu de conditions aux limites, on additionne aux valeurs de pression moyenne des faces perpendiculaires à l'axe $x$ une perturbation ε. Les valeurs moyennes de pression associées aux autres faces restent inchangées. L'estimation de la perturbation ε peut impliquer les valeurs des gradients de pression ou les vitesses de filtration calculées lors de l'étape 1 de l'invention.

  Pour construire le deuxième jeu de conditions aux limites, à partir des conditions aux limites non perturbées, on va ajouter une perturbation aux valeurs moyennes de pression des faces perpendiculaires à l'axe $y$. Les valeurs moyennes de pression associées aux autres faces restent inchangées.

  Pour construire le troisième jeu de conditions aux limites, à partir des conditions aux limites non perturbées, on va ajouter une perturbation aux valeurs moyennes de pression des faces perpendiculaires à l'axe $z$. Les valeurs moyennes de pression associées aux autres faces restent inchangées.

  Les perturbations peuvent être différentes selon le jeu de conditions aux limites.

- Si l'on dispose d'un simulateur d'écoulement par transformées de Fourier tel qu'évoqué dans la demande de brevet FR04/05212 du demandeur, les conditions aux limites peuvent être calculées de la même façon que pour les méthodes basés sur le calcul des flux. On peut néanmoins tirer avantage de la formulation itérative des méthodes par transformées de Fourier en calculant un champs de pression perturbé sur l'ensemble du modèle et non seulement sur les conditions aux limites. Dans ce second cas, on ne parlera plus de conditions aux limites mais plutôt de champs de gradient de pression initial. Perturber les conditions aux limites est équivalent à perturber le champ de gradient de pression initial. Par défaut, le champ de gradient de pression initial est le champ de gradient de pression obtenu à l'aide de la simulation d'écoulement sur le modèle géologique.

  Pour construire le premier champ de gradient de pression perturbé, on additionne à chaque valeur du champ de gradient de pression selon l'axe $x$, une perturbation ε. Les champs de gradient de pression selon les autres directions restent inchangés.

  Pour construire le deuxième champ de gradient de pression perturbé, on additionne à chaque valeur du champ de gradient de pression selon l'axe $y$, une perturbation ε. Les champs de gradient de pression selon les autres directions restent inchangés.

Pour construire le troisième champ de gradient de pression perturbé, on additionne à chaque valeur du champ de gradient de pression selon l'axe *z*, une perturbation ε. Les champs de gradient de pression selon les autres directions restent inchangés.

### 6. Simulations d'écoulements sur le modèle local relatif à chacune des faces selon les 3 jeux de conditions aux limites :

A partir des conditions aux limites perturbées ou des champs de pression perturbés, on effectue des simulations d'écoulements monophasiques selon les mêmes principes que ceux évoqués à l'étape 2. Les résultats de ces simulations d'écoulements sont des valeurs de pression, de gradient de pression et de vitesse de filtration.

### 7. Calcul des valeurs moyennes relatives au modèle local de chaque face selon les 3 jeux de conditions aux limites:

Pour chaque modèle local et chaque simulation d'écoulement sur ce modèle local, on calcule, de la même façon qu'à l'étape 4, les valeurs moyennes des trois composantes du vecteur vitesse de filtration. On obtient alors trois vecteurs vitesses de filtration moyennes :

$$U^{p_1} = \begin{pmatrix} U_x^{p_1} \\ U_y^{p_1} \\ U_z^{p_1} \end{pmatrix}, \ U^{p_2} = \begin{pmatrix} U_x^{p_2} \\ U_y^{p_2} \\ U_z^{p_2} \end{pmatrix} \text{ et } U^{p_3} = \begin{pmatrix} U_x^{p_3} \\ U_y^{p_3} \\ U_z^{p_3} \end{pmatrix} \tag{6}$$

### 8. Calcul des valeurs de perméabilités absolues inter-mailles pour chaque modèle local relatif à une face du maillage associé au modèle de réservoir :

Pour chaque modèle local relatif à une face, on dispose de la valeur moyenne de la vitesse de filtration non perturbé $U^c$ et des trois valeurs moyennes de la vitesse de filtration issues de simulation d'écoulement aux conditions aux limites perturbées, $U^{p1}, U^{p2}$ et $U^{p3}$.

Dans le cas de simulation d'écoulement avec les conditions aux limites non perturbées, la loi de Darcy s'écrit :

$$U_x^c = -\left( k_{xx} \frac{\Delta p_x}{\Delta l_x} + k_{xy} \frac{\Delta p_y}{\Delta l_y} + k_{xz} \frac{\Delta p_z}{\Delta l_z} \right) \tag{7a}$$

$$U_y^c = -\left( k_{yx} \frac{\Delta p_x}{\Delta l_x} + k_{yy} \frac{\Delta p_y}{\Delta l_y} + k_{yz} \frac{\Delta p_z}{\Delta l_z} \right) \tag{7b}$$

$$U_z^c = -\left( k_{zx} \frac{\Delta p_x}{\Delta l_x} + k_{zy} \frac{\Delta p_y}{\Delta l_y} + k_{zz} \frac{\Delta p_z}{\Delta l_z} \right) \tag{7c}$$

avec $\mathbf{K} = \begin{pmatrix} k_{xx} & k_{xy} & k_{xz} \\ k_{yx} & k_{yy} & k_{yz} \\ k_{zx} & k_{zy} & k_{zz} \end{pmatrix}$ tenseur de perméabilité absolue inter-maille, $\Delta p_x, \Delta p_y, \Delta p_z$ différence de pression selon respectivement les directions *x, y* et *z* ; et $\Delta l_x, \Delta l_y, \Delta l_z$ les longueurs de la maille décalée selon respectivement les directions *x, y* et *z*.

Dans le cas de la simulation d'écoulement avec les conditions aux limites perturbées selon la direction *x*, cette même loi s'écrit :

$$U_x^{p_1} = -\left( k_{xx} \frac{\Delta p_x - \varepsilon}{\Delta l_x} + k_{xy} \frac{\Delta p_y}{\Delta l_y} + k_{xz} \frac{\Delta p_z}{\Delta l_z} \right) \qquad (8a$$

$$U_y^{p_1} = -\left( k_{yx} \frac{\Delta p_x - \varepsilon}{\Delta l_x} + k_{yy} \frac{\Delta p_y}{\Delta l_y} + k_{yz} \frac{\Delta p_z}{\Delta l_z} \right) \qquad (8b$$

$$U_z^{p_1} = -\left( k_{zx} \frac{\Delta p_x - \varepsilon}{\Delta l_x} + k_{zy} \frac{\Delta p_y}{\Delta l_y} + k_{zz} \frac{\Delta p_z}{\Delta l_z} \right) \qquad (8c$$

En retranchant l'équation 7 à l'équation 8, on obtient :

$$k_{xx} = \frac{\left( U_x^{p_1} - U_x^c \right) \Delta l_x}{\varepsilon} \text{ , } k_{yx} = \frac{\left( U_y^{p_1} - U_y^c \right) \Delta l_y}{\varepsilon} \text{ et } k_{zx} = \frac{\left( U_z^{p_1} - U_z^c \right) \Delta l_z}{\varepsilon} \qquad (8$$

En suivant un processus similaire avec les valeurs moyennes de la vitesse de filtration issues des simulations d'écoulements avec des conditions aux limites perturbées selon la direction $y$. On peut calculer les composantes $k_{xy}$, $k_{yy}, k_{zy}$ du tenseur de perméabilité absolue inter-maille.

$$k_{xy} = \frac{\left( U_x^{p_2} - U_x^c \right) \Delta l_x}{\varepsilon} \text{ , } k_{yy} = \frac{\left( U_y^{p_2} - U_y^c \right) \Delta l_y}{\varepsilon} \text{ et } k_{zy} = \frac{\left( U_z^{p_2} - U_z^c \right) \Delta l_z}{\varepsilon} \qquad (9$$

Enfin, en utilisant les valeurs moyennes de la vitesses de filtration issues des simulations d'écoulements avec des conditions aux limites perturbées selon la direction $z$. On peut calculer les composantes $k_{xz}, k_{yz}, k_{zz}$ du tenseur de perméabilité absolue inter-maille.

$$k_{xz} = \frac{\left( U_x^{p_3} - U_x^c \right) \Delta l_x}{\varepsilon} \text{ , } k_{yz} = \frac{\left( U_y^{p_3} - U_y^c \right) \Delta l_y}{\varepsilon} \text{ et } k_{zz} = \frac{\left( U_z^{p_3} - U_z^c \right) \Delta l_z}{\varepsilon} \qquad (10$$

On obtient ainsi l'ensemble des composantes du tenseur de perméabilité absolue inter-maille dans la base (x, y,z).
Pour des raisons pratiques, on peut préférer avoir la perméabilité absolue inter-maille dans une base où deux vecteurs sont coplanaires à la face et le dernier est orthogonal à celle-ci. Pour effectuer une telle opération, on effectue un changement de base du tenseur de perméabilité absolue. Ce changement de base est une opération bien connue de l'homme du métier. Une telle technique est décrite, par exemple, dans le document suivant :

Bronshtein, I. N. et Semendyayev, K. A., Handbook of mathematics, Springer, 1997.

Dans le cas où l'on souhaite utiliser les transmissivités inter-mailles, on peut les calculer à partir du tenseur de perméabilité inter-maille exprimé dans une base dont un vecteur est orthogonal à la face. La valeur de la transmissivité inter-maille associée à la face se calcule à l'aide de la relation suivante :

$$T_i = \frac{AK_{\theta\theta}^i}{\Delta x_i} \qquad (11$$

avec A surface de la face, $K_{\theta\theta}^i$ la composante du tenseur de perméabilité inter-maille selon la direction orthogonale θ à la face et $\Delta x_i$ la distance entre les centres des deux mailles définissant la face.

**Revendications**

1. Méthode pour calculer les valeurs de perméabilités absolues inter-mailles associées à un modèle numérique de réservoir à l'échelle des simulations numériques d'écoulements représentatif du milieu poreux à partir des valeurs de perméabilité absolue associées à un modèle géologique représentatif du même milieu poreux, dans laquelle on effectue les étapes suivantes:

   - on discrétise dans l'espace ledit modèle de réservoir à l'aide d'un maillage;
   - on effectue une simulation numérique d'écoulement monophasique en régime permanent sur ledit modèle géologique;
   - on isole un domaine spatial de volume non nul contenant chacune des faces des mailles du modèle de réservoir, et on extrait du modèle géologique les mailles du modèle contenues dans ledit domaine, ainsi que les valeurs de perméabilités absolues, de pression, de gradient de pression et de vitesses de filtration associées pour disposer d'un modèle local relatif à la face considérée;
   - on calcule une valeur moyenne du vecteur vitesse de filtration relatif au modèle local d'un domaine;
   - on construit les conditions aux limites du modèle local relatif à chaque face des mailles du modèle de réservoir à l'aide des résultats de la simulation numérique d'écoulement sur le modèle géologique;
   - on perturbe séquentiellement lesdites conditions aux limites selon trois directions de l'espace afin de construire trois jeux de conditions aux limites;
   - on réalise des simulations numériques d'écoulement monophasique en régime permanent selon ces trois jeux de conditions aux limites sur chaque modèle local relatif à la face considérée du maillage du modèle de réservoir;
   - on calcule les valeurs des débits et des gradients de pression associées à chaque maille du domaine local relatif à chaque face;
   - et, on calcule à partir de ces valeurs, les perméabilités absolues inter-mailles associées à chacune des mailles du modèle de réservoir.

2. Méthode selon la revendication 1, dans laquelle ladite simulation numérique d'écoulement est réalisée grâce à des méthodes de discrétisation des équations aux dérivées partielles de type volumes finis cinq points.

3. Méthode selon la revendication 1, dans laquelle ladite simulation numérique d'écoulement est réalisée grâce à des méthodes de simulation/écoulements dans un milieu poreux hétérogène utilisant des transformées de Fourier rapides.

4. Méthode selon la revendication 1, dans laquelle des conditions aux limites réalistes sont utilisées pour la simulation numérique d'écoulement sur le modèle géologique.

5. Méthode selon la revendication 1, dans laquelle ledit modèle local relatif à une face est raffiné pour augmenter la précision des simulations numériques d'écoulements sur ce modèle.

6. Méthode selon la revendication 1, dans laquelle les valeurs des perturbations des conditions aux limites sont calculées à l'aide des valeurs de gradient de pression ou de la vitesse de filtration calculées à l'aide de la simulation numérique d'écoulement sur le modèle géologique.

7. Méthode selon la revendication 1, dans laquelle les perméabilités inter-mailles sont calculées dans une base quelconque.

8. Méthode selon la revendication 1, dans laquelle les perméabilités inter-mailles sont utilisées pour calculer les transmissivités inter-mailles.

**Claims**

1. Method for calculating the absolute permeability values between cells associated with a digital reservoir model on the scale of digital flow simulations representative of the porous medium from the basis of the absolute permeability values associated with a geological model representative of the same porous medium, in which the following steps are carried out:

   - said reservoir model is discretised using a grid;
   - a local simulation of single-phase flow under steady-state conditions is made in the said geological model;
   - a spatial domain of non-zero volume containing each of the sides of the cells in the reservoir model is isolated and the cells of the model present in the said domain are extracted from the geological model together with associated absolute permeability, pressure, pressure gradient and filtration rate values to provide a local model in relation to the side considered;
   - a mean value for the filtration rate vector relative to the local model of a domain is calculated;
   - the limiting conditions of the local model relative to each side of the cells in the reservoir model are constructed using the results of the digital flow simulation in the geological model;
   - the said limiting conditions are sequentially disturbed in three spatial directions in order to construct three sets of limiting conditions;
   - digital single-phase flow simulations under steady-state conditions are performed on the basis of these three sets of limiting conditions in each local model in relation to the considered side of the grid in the reservoir model;
   - the values of the flow rates and pressure gradients associated with each cell in the local domain relating to each side are calculated;
   - and the absolute permeabilities between cells associated with each of the cells in the reservoir model are calculated from these values.

2. Method according to Claim 1, in which the said digital flow simulation is performed using methods for discretising partial derivative equations of the five point finite volumes type.

3. Method according to Claim 1, in which the said digital flow simulation is performed using methods for simulating flows in a heterogeneous porous medium using fast Fourier transforms.

4. Method according to Claim 1, in which realistic limiting conditions are used to digitally simulate flow in the geological model.

5. Method according to Claim 1, in which the said local model relating to one side is refined to increase the accuracy of digital flow simulations in this model.

6. Method according to Claim 1, in which the values of the disturbances in the limiting conditions are calculated using pressure gradient or filtration rate values calculated using the digital flow simulation in the geological model.

7. Method according to Claim 1, in which permeabilities between cells are calculated for any base.

8. Method according to Claim 1, in which permeabilities between cells are used to calculate transmissivities between cells.

**Patentansprüche**

1. Verfahren zum Berechnen der absoluten Durchlässigkeitswerte zwischen Gitterzellen, die mit einem numerischen Lagerstättenmodell, das für das poröse Medium repräsentativ ist, im numerischen Strömungssimulationsmaßstab assoziiert sind, ausgehend von absoluten Durchlässigkeitswerten, die mit einem geologischen Modell assoziiert sind, das für das gleiche poröse Medium repräsentativ ist, wobei die folgenden Schritte durchgeführt werden:

   - räumliches Diskretisieren des Lagerstättenmodells mit Hilfe eines Gitters;
   - Durchführen einer numerischen Simulation der stationären einphasigen Strömung an dem geologischen Modell;

- Isolieren eines räumlichen Bereichs mit einem Volumen, das nicht Null ist, der jede der Seiten der Gitterzellen des Lagerstättenmodells enthält, und Extrahieren der Gitterzellen des Modells aus dem geologischen Modell, die in dem Bereich enthalten sind, sowie der assoziierten absoluten Werte für Durchlässigkeit, Druck, Druckgradienten und Filtrationsgeschwindigkeiten, um über ein lokales Modell bezogen auf die betrachtete Seite zu verfügen;

- Berechnen eines Mittelwerts des Filtrationsgeschwindigkeitsvektors bezogen auf das lokale Modell eines Bereichs;

- Konstruieren der Randbedingungen des lokalen Modells bezogen auf jede Seite der Gitterzellen des Lagerstättenmodells mit Hilfe der Ergebnisse der numerischen Strömungssimulation an dem geologischen Modell;

- sequentielles Stören der Randbedingungen in drei räumliche Richtungen, um drei Randbedingungssätze zu konstruieren;

- Ausführen der numerischen Simulationen der stationären einphasigen Strömung nach diesen drei Randbedingungssätzen an jedem lokalen Modell bezogen auf die betrachtete Seite des Gitters des Lagerstättenmodells;

- Berechnen der Werte für Strömungsgeschwindigkeiten und Druckgradienten, die mit jeder Gitterzelle des lokalen Bereichs bezogen auf jede Seite assoziiert sind;

- und, ausgehend von diesen Werten, Berechnen der absoluten Durchlässigkeiten zwischen den Gitterzellen, die mit jeder der Gitterzellen des Lagerstättenmodells assoziiert sind.

2. Verfahren nach Anspruch 1, wobei die numerische Strömungssimulation mittels Verfahren zum Diskretisieren partieller Differenzialgleichungen vom Typ Fünf-Punkte-Stern des Finite-Volumen-Verfahrens ausgeführt wird.

3. Verfahren nach Anspruch 1, wobei die numerische Strömungssimulation mittels Verfahren zur numerischen Strömungssimulation in einem heterogenen porösen Medium unter Verwendung schneller Fourier-Transformationen ausgeführt wird.

4. Verfahren nach Anspruch 1, wobei realistische Randbedingungen für die numerische Strömungssimulation an dem geologischen Modell verwendet werden.

5. Verfahren nach Anspruch 1, wobei das lokale Modell bezogen auf eine Seite verfeinert wird, um die Genauigkeit der numerischen Strömungssimulationen an diesem Modell zu erhöhen.

6. Verfahren nach Anspruch 1, wobei die Störungswerte für die Randbedingungen mit Hilfe der Werte für Druckgradient oder Filtrationsgeschwindigkeit berechnet werden, die mit Hilfe der numerischen Strömungssimulation an dem geologischen Modell berechnet wurden.

7. Verfahren nach Anspruch 1, wobei die Durchlässigkeiten zwischen den Gitterzellen auf einer beliebigen Basis berechnet werden.

8. Verfahren nach Anspruch 1, wobei die Durchlässigkeiten zwischen den Gitterzellen verwendet werden, um die Transmissivitäten zwischen den Gitterzellen zu berechnen.

Fig. 1

Fig. 2

Fig. 3

## RÉFÉRENCES CITÉES DANS LA DESCRIPTION

**Documents brevets cités dans la description**

- US 6826520 B1
- FR 0405212

- FR 0409824

**Littérature non-brevet citée dans la description**

- **POINTING D.K.** Corner Point Geometry in reservoir simulation. *Joint IMA/SPE European Conference on the Mathematics of Oil Recovery,* 1989
- **BALAVEN-CLERMIDY,S.** Génération de maillages hybrides pour la simulation des réservoirs pétroliers. *PhD thesis, Ecole des Mines de Paris.,* 2001
- **PALAGI, C.L. ; AZIZ, K.** Use of voronoï grid in reservoir simulation », papier SPE 22889. *66ième Annual Technical Conference and Exhibition,* 1991
- **LEPAGE, F.** Génération de maillages tridimensionnels pour la simulation des phénomènes physiques en géoscience. *thèse de doctorat, Institut National Polytechnique de Lorraine,* 2003
- Mixed and hybrid finite element method. **BREZZI, F. ; FORTIN, M.** Mixed and hybrid finite element method. Springer-Verlag, 1991
- Finite voilume methods. **EYMARD, R. ; GALLOUËT, T. ; HERBIN, R.** Handbook of numerical analysis. 2000
- **RENARD, PH. ; MARSILY, G.** *Calculating equivalent permeability: a review. Advances in water resources,* 1997, vol. 20, 253-278

- **DURLOFSKY, L. J.** Upscaling of geocellular models for reservoir flow simulation : a review of recent progress. *7th International Forum on Reservoir Simulation,* 2003
- **PICKUP, G. E. ; JENSEN, P. S. ; RINGROSE, P.S. ; SORBIE K. S.** A method for calculating permeability tensors using perturbed boundary conditions. *Conference on the Mathematics of the Oil Recovery,* 1992
- **CHEN, Y. ; DURLOFSKY, L.J. ; GERRITSEN, M ; WEN X.H.** A coupled local-global upscaling approach for simulating flow in highly heterogeneous formations. *Advances in water resources,* 2003, vol. 26, 1041-1060
- **PEACEMAN, D. W.** Fundamentals of numerical reservoir simulation. Elsevier scientific pub, 1977
- Power averaging for block effective permeability, paper SPE 15128. **JOURNEL, A. G. ; DEUTSCH, C. ; DESBARATS A. J.** 56th California Regional Meeting of SPE, Society of Petroleum Engineer. 1986
- **ROMEU, R. K. ; NOETINGER, B.** Calculation of internodal transmissivities in finite difference models of flows in heterogeneous porous media. *Water Resources Research,* 1995, vol. 31 (4), 943-959
- **BRONSHTEIN, I. N. ; SEMENDYAYEV, K. A.** Handbook of mathematics. Springer, 1997